# EUROPEAN PATENT SPECIFICATION

(11) **EP 4 431 002 B1**
(45) Date of publication and mention of the grant of the patent: **25.02.2026**
(21) Application number: 23833298.5
(22) Date of filing: 07.06.2023
(51) Int. Cl.: A47L 11/28, A47L 11/40

(54) **CLEANING METHOD AND APPARATUS OF FLOOR CLEANING DEVICE, AND CLEANING DEVICE**
REINIGUNGSVERFAHREN UND -VORRICHTUNG FÜR BODENREINIGUNGSVORRICHTUNG UND REINIGUNGSVORRICHTUNG
APPAREIL ET PROCÉDÉ DE NETTOYAGE DE DISPOSITIF DE NETTOYAGE DE SOL ET DISPOSITIF DE NETTOYAGE

(30) Priority: 30.01.2023 CN 202310081656
(43) Date of publication of application: 18.09.2024
(73) Proprietor: Wuxi Little Swan Electric Co., Ltd., Wuxi, Jiangsu 214028 (CN)
(72) Inventor: YANG, Weiguo, Wuxi, Jiangsu 214028 (CN); ZHANG, Zhiwei, Wuxi, Jiangsu 214028 (CN); WANG, Yuqing, Wuxi, Jiangsu 214028 (CN)
(74) Representative: RGTH
(86) International application number: PCT/CN2023/098997
(87) International publication number: WO 2024/159684

(56) References cited:
- WO-A2-2022/200524
- WO-A2-2022/200524
- CN-A- 112 956 976
- CN-A- 113 331 746
- CN-A- 113 349 688
- CN-A- 113 576 347
- CN-A- 113 647 872
- CN-A- 114 747 989
- CN-A- 115 151 173
- CN-A- 115 462 708
- CN-U- 209 404 651
- CN-U- 212 996 280
- CN-U- 212 996 280
- CN-U- 215 959 652
- CN-U- 216 393 981
- CN-U- 216 776 932
- CN-U- 218 186 677
- US-A1- 2021 369 072

## Description

This application claims a priority to Chinese Patent Application No. 202310081656.X, entitled "WASHING METHOD AND APPARATUS FOR FLOOR CLEANING DEVICE, AND CLEANING APPARATUS" and filed with China National Intellectual Property Administration on January 30, 2023.

### FIELD

The present invention relates to the field of cleaning apparatus technologies, and more particularly, to a washing method and apparatus for a floor cleaning device, and a cleaning apparatus.

### BACKGROUND

With the progress of science and technology and the development of the economy, floor cleaning devices are making inroads into people's homes. The accumulated dust and debris on the floor can be cleaned by the floor cleaning device, freeing people's hands.

In the related art, after the floor cleaning device cleans the floor, a cleaning member of a mobile cleaning portion gets dirty and therefore needs to return to a washing tank of a floor cleaning device base station for washing. When the mobile cleaning portion returns to the floor cleaning device base station, water is injected into the washing tank of the floor cleaning device base station. The cleaning member of the mobile cleaning portion is washed after water is injected into the washing tank of the floor cleaning device base station. However, due to limited wetting of the cleaning member during a washing, a washing efficiency for the cleaning member is low. WO 2022/200524 A3 discloses an autonomous mobile robot and service station. CN 209 404 651 U describes a cleaning system and base station for cleaning system. CN 212 996 280 U relates to a cleaning robot with a cleaning seat.

### SUMMARY

### I. Technical problem to be solved

The technical problem to be solved of the present invention is a low washing efficiency for a cleaning member due to limited wetting of the cleaning member during a washing.

### II. Technical solutions

The above technical problem is solved by ta washing method, a washing apparatus for a floor cleaning device, a computer-readable storage medium, a cleaning device and a cleaning apparatus according to the claims.

According to the present invention, a washing method of a floor cleaning device is provided. The washing method includes: obtaining a washing instruction; and supplying, based on the washing instruction, water to a washing tank of a floor cleaning device base station and to a cleaning member of a mobile cleaning portion, wherein said controlling, based on the washing instruction, the water supply to the washing tank of the floor cleaning device base station and to the cleaning member of the mobile cleaning portion is characterized by: controlling a water supply valve of the cleaning member to be opened for supplying water to the cleaning member of the mobile cleaning portion, and controlling a water supply valve of the washing tank to be opened for supplying water to the washing tank of the floor cleaning device base station.

In another exemplary embodiment of the present invention, the washing method further includes, prior to said supplying, based on the washing instruction, water to the washing tank of the floor cleaning device base station and to the cleaning member of the mobile cleaning portion: controlling water supply to a water tank of the floor cleaning device base station to reach a first predetermined water volume threshold.

In another exemplary embodiment of the present invention, the washing method further includes, subsequent to said controlling the water supply to the water tank of the floor cleaning device base station to reach the first predetermined water volume threshold: controlling the water supply to a water tank of the mobile cleaning portion to reach a second predetermined water volume threshold.

In another exemplary embodiment of the present invention, said controlling, based on the washing instruction, the water supply to the washing tank of the floor cleaning device base station and to the cleaning member of the mobile cleaning portion includes: controlling, based on the washing instruction, the water supply to the cleaning member of the mobile cleaning portion; and controlling the water supply to the washing tank of the floor cleaning device base station subsequent to said controlling the water supply to the cleaning member of the mobile cleaning portion.

In another exemplary embodiment of the present invention, said controlling, based on the washing instruction, the water supply to the washing tank of the floor cleaning device base station and to the cleaning member of the mobile cleaning portion includes: controlling, based on the washing instruction, the water supply to the washing tank of the floor cleaning device base station; and controlling the water supply to the cleaning member of the mobile cleaning portion subsequent to said controlling the water supply to the washing tank of the floor cleaning device base station.

In another exemplary embodiment of the present invention, said controlling, based on the washing instruction, the water supply to the washing tank of the floor cleaning device base station and to the cleaning member of the mobile cleaning portion includes: alternately controlling, based on the washing instruction, the water supply to the washing tank of the floor cleaning device base station and to the cleaning member of the mobile cleaning portion.

In another exemplary embodiment of the present invention, said controlling, based on the washing instruction, the water supply to the washing tank of the floor cleaning device base station and to the cleaning member of the mobile cleaning portion includes: simultaneously controlling, based on the washing instruction, the water supply to the cleaning member of the mobile cleaning portion and to the washing tank of the floor cleaning device base station.

In another exemplary embodiment of the present invention, the washing method further includes: controlling, in response to controlling the water supply to the washing tank of the floor cleaning device base station, the cleaning member of the mobile cleaning portion to rotate for being washed.

In another exemplary embodiment of the present invention, said controlling, based on the washing instruction, the water supply to the washing tank of the floor cleaning device base station and to the cleaning member of the mobile cleaning portion includes: controlling, based on the washing instruction, the water supply to the washing tank of the floor cleaning device base station prior to the mobile cleaning portion entering the floor cleaning device base station; and controlling the water supply to the cleaning member of the mobile cleaning portion subsequent to the mobile cleaning portion entering the floor cleaning device base station.

In another exemplary embodiment of the present invention, said controlling, based on the washing instruction, the water supply to the washing tank of the floor cleaning device base station and to the cleaning member of the mobile cleaning portion includes: controlling, based on the washing instruction, several washing processes to be performed on the cleaning member of the mobile cleaning portion during each washing operation. Each of the several washing processes comprises: controlling the water supply to the washing tank of the floor cleaning device base station and to the cleaning member of the mobile cleaning portion.

In another exemplary embodiment of the present invention, said supplying, based on the washing instruction, water to the washing tank of the floor cleaning device base station and to the cleaning member of the mobile cleaning portion includes: controlling, based on the washing instruction, several washing processes to be performed on the cleaning member of the mobile cleaning portion during each washing operation. A last washing process of the several washing processes comprises: controlling the water supply to the washing tank of the floor cleaning device base station and to the cleaning member of the mobile cleaning portion. Other washing processes of the several washing processes comprises: controlling the water supply to the washing tank of the floor cleaning device base station.

According to the present invention, a control apparatus for a cleaning device is further provided which is configured to conduct an above described method. The control apparatus includes: an obtaining module configured to obtain a washing instruction; and a control module configured to supply, based on the washing instruction, water to a washing tank of a floor cleaning device base station and to a cleaning member of a mobile cleaning portion.

According to the present invention, a computer-readable storage medium is further provided. The computer-readable storage medium stores a program or an instruction. The program or the instruction causes a computer to perform the control method of the cleaning device according to any of the above-mentioned embodiments.

According to the present invention, a cleaning device is further provided. The cleaning device includes a processor and a memory. The processor is configured to invoke a program or an instruction stored in the memory to perform the control method of the cleaning device according to any of the above-mentioned embodiments.

According to the present invention, a floor cleaning device is further provided. The floor cleaning device includes a clothes treatment device and the floor cleaning device according to any of the above-mentioned embodiments. The floor cleaning device base station of the floor cleaning device is located in a space below the laundry treatment device.

### III. Advantageous effects

Compared with the related art, the above-mentioned technical solutions provided by the embodiments of the present invention have the following advantages:

According to the present invention, the washing method of the floor cleaning device includes: obtaining the washing instruction; and controlling, based on the washing instruction, the water supply to the washing tank of the floor cleaning device base station and to the cleaning member of the mobile cleaning portion. In this way, when the cleaning member of the mobile cleaning portion needs to be washed, the water supply to the washing tank of the floor cleaning device base station and to the cleaning member of the mobile cleaning portion may be performed, instead of adopting a method in the related art of washing the cleaning member subsequent to the water supply to the washing tank of the floor cleaning device base station only which has a low washing efficiency. Therefore, with the washing method of the floor cleaning device provided by the present invention, the cleaning member may be washed by supplying water to the washing tank of the floor cleaning device base station and to the cleaning member of the mobile cleaning portion. Consequently, the cleaning member of the mobile cleaning portion can be sufficiently wetted, which allows the dirt on the cleaning member to be sufficiently dissolved, improving the washing efficiency for the cleaning member.

### BRIEF DESCRIPTION OF THE DRAWINGS

The accompanying drawings, which are incorporated in and constitute a part of this specification, illustrate embodiments of the present invention and serve to explain the principles of the present invention in conjunction with the description.

To clearly explain the embodiments of the present invention or technical solutions in the related art, drawings used in the description of the embodiments or the related art are briefly described below. Based on these drawings, other drawings can be obtained by those skilled in the art without creative effort.
FIG. 1 is a flowchart illustrating a washing method for a floor cleaning device.
FIG. 2 is a detailed flowchart illustrating a washing method for a floor cleaning device.
FIG. 3 is a block diagram showing a structure of a washing apparatus for a floor cleaning device.
FIG. 4 is a block diagram showing a structure of a cleaning apparatus.
FIG. 5 is a front view of a cleaning apparatus.

### DETAILED DESCRIPTION OF THE EMBODIMENTS

To make the objects, technical solutions, and advantages of embodiments of the present invention more apparent, the technical solutions according to the embodiments of the present invention will be described clearly and completely below. Obviously, the embodiments described below are only a part of the embodiments of the present invention, rather than all embodiments of the present invention. On a basis of the embodiments of the present invention, all other embodiments obtained by those skilled in the art without creative labor shall fall within the protection scope of the present invention.

In the related art, after a floor cleaning device cleans the floor, a cleaning member of a mobile cleaning portion will get dirty and therefore needs to return to a washing tank of a floor cleaning device base station for washing. During the washing, the cleaning member of the mobile cleaning portion is washed subsequent to supplying water to the washing tank of the floor cleaning device base station by a water tank of the floor cleaning device base station. However, such a washing method results in limited wetting of the cleaning member, leading to a low washing efficiency of the floor cleaning device in washing the cleaning member.

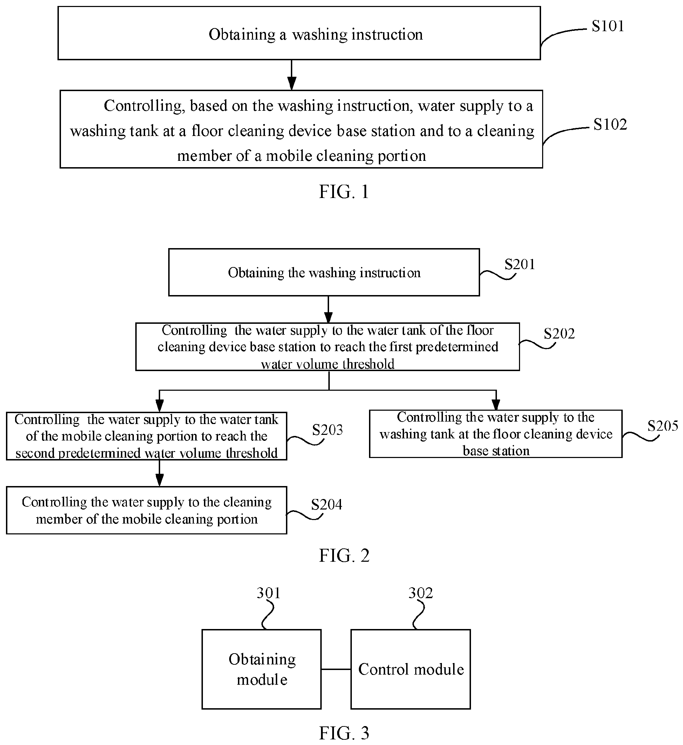

To solve the above problems, the present invention provides a control method for a cleaning device. FIG. 1 is a flowchart illustrating a washing method for a floor cleaning device according to an embodiment of the present invention. The control method for the cleaning device may be an application scenario where the floor cleaning device needs to be washed. The method may be performed by a washing apparatus for a floor cleaning device according to the embodiments of the present invention. A control apparatus for the cleaning device may be implemented using software and/or hardware. As illustrated in FIG. 1, the method includes the following operations at blocks.

At block S101, a washing instruction is obtained.

In an exemplary embodiment of the present invention, the floor cleaning device includes a floor cleaning device base station and a mobile cleaning portion. The floor cleaning device base station has an accommodation cavity for accommodating the mobile cleaning portion. Operation procedures such as charging, liquid supplement, and washing of a mobile cleaning device can be realized in the accommodation cavity. The floor cleaning device base station includes a washing tank and a water tank. When a cleaning member of the mobile cleaning portion gets dirty after cleaning a floor area, the cleaning member of the mobile cleaning portion may return to the floor cleaning device base station. The cleaning member of the mobile cleaning portion is washed in the washing tank of the floor cleaning device base station.

After the mobile cleaning portion cleans some floor areas, if the cleaning member of the mobile cleaning portion gets dirty and a washing need arises for the floor cleaning device, the washing instruction may be issued by the mobile cleaning portion or a terminal device communicatively connected to the floor cleaning device. A device for issuing the washing instruction is not limited in the embodiments of the present invention.

At block S102, water supply to a washing tank of a floor cleaning device base station and to a cleaning member of a mobile cleaning portion is controlled based on the washing instruction.

In an exemplary embodiment of the present invention, when the cleaning member of the mobile cleaning portion gets dirty and needs to be washed, the water supply to the washing tank of the floor cleaning device base station and to the cleaning member of the mobile cleaning portion may be controlled, and then the cleaning member of the mobile cleaning portion that returns to the floor cleaning device base station may be controlled to be washed in the washing tank of the floor cleaning device base station. Therefore, the cleaning member of the mobile cleaning portion can be sufficiently wetted. Dirt on the cleaning member can be sufficiently dissolved when the cleaning member is sufficiently wetted. When the cleaning member is washed in the washing tank of the floor cleaning device base station, the dirt on the cleaning member can be more easily removed. In this way, a washing result of the floor cleaning device is satisfactory, which improves the washing efficiency for the cleaning member.

According to the invention, the washing method of the floor cleaning device may be controlled by a washing apparatus for the floor cleaning device. For example, the washing apparatus may be integrated into the floor cleaning device base station. According to the invention, the washing apparatus is configured to control, based on the washing instruction, a water supply valve of the washing tank to be opened for supplying water to the washing tank of the floor cleaning device base station, and a water supply valve of the cleaning member to be opened for supplying water to the cleaning member of the mobile cleaning portion. The washing method of the floor cleaning device may also be controlled and performed by the terminal device. The terminal device is configured to transmit a water supply instruction to the floor cleaning device base station and to the mobile cleaning portion subsequent to obtaining the washing instruction.

In the embodiments of the present invention, when the cleaning member of the mobile cleaning portion needs to be washed, the water supply to the washing tank of the floor cleaning device base station and to the cleaning member of the mobile cleaning portion may be performed, instead of adopting a method in the related art of washing the cleaning member subsequent to the water supply to the washing tank of the floor cleaning device base station only which has a low washing efficiency. Therefore, with the washing method of the floor cleaning device, the cleaning member may be washed by supplying water to the washing tank of the floor cleaning device base station and to the cleaning member of the mobile cleaning portion. Consequently, the cleaning member of the mobile cleaning portion can be sufficiently wetted, which allows the dirt on the cleaning member to be sufficiently dissolved, improving the washing efficiency for the cleaning member.

In another exemplary embodiment of the present invention, the washing method further includes, prior to the water supply to the washing tank of the floor cleaning device base station and to the cleaning member of the mobile cleaning portion being controlled based on the washing instruction: controlling water supply to a water tank of the floor cleaning device base station to reach a first predetermined water volume threshold.

In an exemplary embodiment of the present invention, to ensure that the water tank of the floor cleaning device base station contains a sufficient amount of water that can be injected into the washing tank of the floor cleaning device base station and the cleaning member of the mobile cleaning portion, the water supply to the water tank of the floor cleaning device base station may be controlled to reach the first predetermined water volume threshold prior to controlling the water tank of the floor cleaning device base station to supply water to the washing tank of the floor cleaning device base station and to the cleaning member of the mobile cleaning portion. For example, a water level sensor may be disposed in the water tank of the floor cleaning device base station. Once the water level sensor senses that a water volume in the water tank of the floor cleaning device base station reaches the first predetermined water volume threshold, the water tank of the floor cleaning device base station is controlled to stop supplying water.

For example, the water tank of the floor cleaning device base station has a capacity of A liters. The water tank of the floor cleaning device base station may be controlled to be filled up with water. For example, A liters of water may be supplied to the water tank of the floor cleaning device base station. In addition, the water tank of the floor cleaning device base station may be controlled not to be filled up with water. For example, when the water tank of the floor cleaning device base station has the capacity of A liters, B liters of water are added to the water tank of the floor cleaning device base station to avoid a problem of water overflow. B is smaller than A. It should be noted that a specific value of the first predetermined water volume threshold may be set based on an actual use demand of the floor cleaning device. The embodiments of the present invention are not limited in this regard.

In some embodiments, the water supply to the water tank of the floor cleaning device base station may be controlled while simultaneously controlling the water supply from the water tank of the floor cleaning device base station to the washing tank of the floor cleaning device base station. Therefore, water can be injected into the washing tank of the floor cleaning device base station without waiting for the water supply to the water tank of the floor cleaning device base station. When a predetermined amount of water is available in the water tank of the floor cleaning device base station, the water in the water tank of the floor cleaning device base station may be injected into the washing tank of the floor cleaning device base station. Similarly, when the predetermined amount of water is available in the water tank of the floor cleaning device base station, the water tank of the floor cleaning device base station may also be controlled to supply water to the cleaning member of the mobile cleaning portion, which shortens the time taken for supplying water to the cleaning member of the mobile cleaning portion. In some embodiments, a rate at which water is supplied to the water tank of the floor cleaning device base station may be set to be greater than a rate at which the water tank of the floor cleaning device base station supplies water to the washing tank of the floor cleaning device base station and the cleaning member of the mobile cleaning portion.

In another exemplary embodiment of the present invention, the washing method further includes, subsequent to the controlling the water supply to the water tank of the floor cleaning device base station to reach the first predetermined water volume threshold: controlling the water supply to a water tank of the mobile cleaning portion to reach a second predetermined water volume threshold.

In an exemplary embodiment of the present invention, the mobile cleaning portion may further be provided with the water tank. A water injection into the water tank of the mobile cleaning portion may be controlled subsequent to the water supply to the water tank of the floor cleaning device base station reaching the first predetermined water volume threshold. For example, a water level sensor may be disposed in the water tank of the mobile cleaning portion. When the water level sensor senses that a water volume in the water tank of the mobile cleaning portion reaches the second predetermined water volume threshold, the water tank of the mobile cleaning portion is controlled to supply no water.

In some embodiments, the water tank of the mobile cleaning portion can be configured to spray water on the cleaning member of the mobile cleaning portion when the mobile cleaning portion has a washing task and a floor cleaning need. Therefore, during cleaning of the floor by the mobile cleaning portion, the cleaning member can reach a predetermined degree of wetting, which improves cleaning performance of the floor cleaning device on the floor.

In another exemplary embodiment of the present invention, controlling, based on the washing instruction, the water supply to the washing tank of the floor cleaning device base station and to the cleaning member of the mobile cleaning portion includes: controlling, based on the washing instruction, the water supply to the cleaning member of the mobile cleaning portion; and controlling the water supply to the washing tank of the floor cleaning device base station subsequent to controlling the water supply to the cleaning member of the mobile cleaning portion.

In an exemplary embodiment of the present invention, when the cleaning member of the mobile cleaning portion needs to be washed, the water supply to the cleaning member of the mobile cleaning portion may be controlled to wet the cleaning member, e.g., a mop. When the water supply to the cleaning member is performed for a period of time, e.g., when the cleaning member is wetted to predetermined humidity, the water supply to the washing tank of the floor cleaning device base station may be controlled.

It should be noted that when the water supply to the cleaning member is performed for the period of time, a water supply channel of the cleaning member may be closed, and then the water supply to the washing tank of the floor cleaning device base station may be controlled. Or, when the water supply to the cleaning member is performed for the period of time, the water supply channel of the cleaning member may be kept open and a water supply channel of the washing tank of the floor cleaning device base station may be opened, for supplying water to the cleaning member and the washing tank of the floor cleaning device base station simultaneously.

Therefore, controlling the water supply to the cleaning member of the mobile cleaning portion can wet the cleaning member to allow the dirt on the cleaning member to be partially dissolved. Then, when the water supply to the washing tank of the floor cleaning device base station is controlled to wash the cleaning member, the dirt on the cleaning member can be easily cleaned off in the washing tank, which improves a washing result for the cleaning member, improving the washing efficiency of the floor cleaning device.

In another exemplary embodiment of the present invention, controlling, based on the washing instruction, the water supply to the washing tank of the floor cleaning device base station and to the cleaning member of the mobile cleaning portion includes: controlling, based on the washing instruction, the water supply to the washing tank of the floor cleaning device base station; and controlling the water supply to the cleaning member of the mobile cleaning portion subsequent to controlling the water supply to the washing tank of the floor cleaning device base station.

In an exemplary embodiment of the present invention, when the cleaning member of the mobile cleaning portion needs to be washed, the water supply to the washing tank of the floor cleaning device base station may be controlled. After the water supply to the washing tank of the floor cleaning device base station is performed for a period of time, the water supply to the cleaning member of the mobile cleaning portion is controlled. A predetermined amount of water is ensured to be available in the washing tank, in such a manner that washing of the cleaning member can be started at any time. In addition, the water supply to the cleaning member can improve wetting of the cleaning member, which improves the washing efficiency for the cleaning member.

It should be noted that after the water supply to the washing tank is performed for the period of time, the water supply channel of the washing tank may be closed, and then the water supply to the mobile cleaning portion may be controlled. Or, after the water supply to the washing tank is performed for the period of time, the water supply channel of the washing tank of the floor cleaning device base station may be kept open and the water supply channel of the cleaning member of the mobile cleaning portion may be opened, for supplying water to the cleaning member and to the washing tank of the floor cleaning device base station simultaneously.

In another exemplary embodiment of the present invention, controlling, based on the washing instruction, the water supply to the washing tank of the floor cleaning device base station and to the cleaning member of the mobile cleaning portion includes: alternately controlling, based on the washing instruction, the water supply to the washing tank of the floor cleaning device base station and to the cleaning member of the mobile cleaning portion.

In an exemplary embodiment of the present invention, when the cleaning member of the mobile cleaning portion needs to be washed, the water supply to the washing tank of the floor cleaning device base station and to the cleaning member of the mobile cleaning portion may be alternately controlled in a predetermined order. For example, the water supply to the washing tank of the floor cleaning device base station may be controlled for a period of time. Then, the water supply channel of the washing tank may be closed, and the water supply channel of the cleaning member may be opened to control the water supply to the cleaning member. Further, the water supply to the cleaning member is performed for a period of time. Then, the water supply channel of the cleaning member may be controlled to be closed, and the water supply channel of the washing tank may be opened to supply water to the washing tank. The water supply to the washing tank and to the cleaning member is realized alternately in such an order.

Or, the water supply to the cleaning member of the mobile cleaning portion may be controlled for a period of time. Then, the water supply channel of the cleaning member may be closed, and the water supply channel of the washing tank may be opened to control the water supply to the washing tank. Further, the water supply to the washing tank is performed for a period of time. Then, the water supply channel of the washing tank is controlled to be closed, and the water supply channel of the cleaning member is opened to supply water to the cleaning member. The water supply to the washing tank and to the cleaning member is realized alternately in such an order.

In another exemplary embodiment of the present invention, controlling, based on the washing instruction, the water supply to the washing tank of the floor cleaning device base station and to the cleaning member of the mobile cleaning portion includes: simultaneously controlling, based on the washing instruction, the water supply to the cleaning member of the mobile cleaning portion and to the washing tank of the floor cleaning device base station.

In an exemplary embodiment of the present invention, to improve the washing efficiency of the floor cleaning device, the water supply from the water tank of the mobile cleaning portion to the cleaning member of the mobile cleaning portion may be controlled while simultaneously controlling the water supply from the water tank of the floor cleaning device base station to the washing tank of the floor cleaning device base station, for washing the cleaning member. As a result, the time for waiting for the water supply to the washing tank of the floor cleaning device base station and the cleaning member of the mobile cleaning portion is shortened, which allows the cleaning member to be wetted while being washed. Therefore, not only can the washing result for the cleaning member be improved, but also the washing time spent on the cleaning member can be shortened and the washing efficiency of the floor cleaning device can be improved.

In another exemplary embodiment of the present invention, the washing method further includes: controlling, in response to controlling the water supply to the washing tank of the floor cleaning device base station, the cleaning member of the mobile cleaning portion to rotate for being washed.

In an exemplary embodiment of the present invention, during the water supply to the washing tank of the floor cleaning device base station, the cleaning member of the mobile cleaning portion can be controlled to be rotated for washing to remove stains on the cleaning member, considering that the washing tank already contains water that can wet the cleaning member. Therefore, by controlling, in response to the water supply to the washing tank of the floor cleaning device base station, the cleaning member of the mobile cleaning portion to rotate for being washed, the cleaning member of the mobile cleaning portion has no need to wait for a completion of the water supply to the washing tank before being washed. Therefore, the washing efficiency for the cleaning member is improved.

Also, the cleaning member of the mobile cleaning portion may be controlled to rotate for being washed subsequent to the completion of the water supply to the washing tank. The embodiments of the present invention are not limited in this regard.

In another exemplary embodiment of the present invention, controlling, based on the washing instruction, the water supply to the washing tank of the floor cleaning device base station and to the cleaning member of the mobile cleaning portion includes: controlling, based on the washing instruction, the water supply to the washing tank of the floor cleaning device base station prior to the floor cleaning device entering the floor cleaning device base station; and controlling the water supply to the cleaning member of the mobile cleaning portion subsequent to the floor cleaning device entering the floor cleaning device base station.

In an exemplary embodiment of the present invention, the water supply to the washing tank of the floor cleaning device base station may be performed prior to the floor cleaning device entering the floor cleaning device base station. For example, the mobile cleaning portion may be provided with a detector. The detector is configured to detect a degree of dirtiness of the cleaning member, and generate the washing instruction when the degree of dirtiness of the cleaning member of the mobile cleaning portion reaches a predetermined threshold. The floor cleaning device base station or an intelligent terminal can be configured to control, in response to receiving the washing instruction, the mobile cleaning portion to return to the floor cleaning device base station for washing. In some other embodiments, the mobile cleaning portion can be configured to automatically return to the floor cleaning device base station for washing when the washing instruction is generated subsequent to a completion of cleaning of the mobile cleaning portion. The floor cleaning device base station or the intelligent terminal can be configured to control the water supply to the washing tank of the floor cleaning device base station subsequent to reception of the washing instruction, e.g., during a movement of the mobile cleaning portion from a to-be-cleaned area to the floor cleaning device base station or at a time point of a start of the movement. The water supply to the cleaning member of the mobile cleaning portion is performed to wet the cleaning member subsequent to the floor cleaning device entering the floor cleaning device base station.

According to an embodiment of the present invention, since the water supply to the washing tank of the floor cleaning device base station is controlled prior to the floor cleaning device entering the floor cleaning device base station, the mobile cleaning portion has no need to wait for the water supply to the washing tank of the floor cleaning device base station subsequent to entering the floor cleaning device base station. Therefore, time taken by the cleaning member of the mobile cleaning portion waiting for the water supply can be saved to improve the washing efficiency of the floor cleaning device.

In another exemplary embodiment of the present invention, controlling, based on the washing instruction, the water supply to the washing tank of the floor cleaning device base station and to the cleaning member of the mobile cleaning portion includes: controlling, based on the washing instruction, several washing processes to be performed on the cleaning member of the mobile cleaning portion during each washing operation. During each of the several washing processes, the water supply to the washing tank of the floor cleaning device base station and to the cleaning member of the mobile cleaning portion is controlled.

For example, when the floor cleaning device performs a floor cleaning operation based on the washing instruction, several washing processes need to be performed on the cleaning member of the mobile cleaning portion. For example, when the cleaning member gets dirty after cleaning the floor of the living room, the floor cleaning device is controlled to return to the floor cleaning device base station to wash the cleaning member. Once washed thoroughly, the cleaning member continues to perform a floor cleaning task, e.g., the floor of the kitchen. During each washing of the cleaning member, the water supply to the cleaning member of the mobile cleaning portion and to the washing tank of the floor cleaning device base station may be controlled. The cleaning member of the mobile cleaning portion may be washed subsequent to the water supply to the washing tank of the floor cleaning device base station. Further, the cleaning member of the mobile cleaning portion can be sufficiently wetted subsequent to the water injection into the cleaning member of the mobile cleaning portion, which facilitates washing for the cleaning member in the washing tank, improving the washing result for the cleaning member.

In another exemplary embodiment of the present invention, controlling, based on the washing instruction, the water supply to the washing tank of the floor cleaning device base station and to the cleaning member of the mobile cleaning portion includes: controlling, based on the washing instruction, several washing processes to be performed on the cleaning member of the mobile cleaning portion during each washing operation. During a last washing processe of the several washing processes, the water supply to the washing tank of the floor cleaning device base station and to the cleaning member of the mobile cleaning portion is controlled. During other washing processes of the several washing processes, the water supply to the washing tank of the floor cleaning device base station is controlled.

For example, when the floor cleaning device performs a floor cleaning operation based on the washing instruction, several washing processes need to be performed on the cleaning member of the mobile cleaning portion. When the cleaning member gets dirty after cleaning the floor of the living room, the floor cleaning device is controlled to return to the floor cleaning device base station to wash the cleaning member. Once washed thoroughly, the cleaning member continues to perform a floor cleaning task, e.g., the floor of the kitchen. For example, N washing processes are performed on the cleaning member during each washing operation. The water supply to the washing tank of the floor cleaning device base station is controlled from a first washing to an (N-1)-th washing of the cleaning member. The water supply to the washing tank of the floor cleaning device base station and to the cleaning member of the mobile cleaning portion is controlled during an N-th washing. Therefore, the cleaning member can be fully wetted during the last washing of the several washing processes, which facilitates the washing of the cleaning member in the washing tank, improves the washing result for the cleaning member, and realizes deep washing for the cleaning member. Further, during the remaining washing processes, only the water supply to the washing tank can be controlled, which saves an amount of water used for washing.

FIG. 2 is a detailed flowchart of the washing method of the floor cleaning device according to an embodiment of the present invention. As illustrated in FIG. 2, the washing method of the floor cleaning device includes operations at blocks.

At block S201, the washing instruction is obtained.

At block S202, the water supply to the water tank of the floor cleaning device base station is controlled to reach the first predetermined water volume threshold.

At block S203, the water supply to the water tank of the mobile cleaning portion is controlled to reach the second predetermined water volume threshold.

At block S204, the water supply to the cleaning member of the mobile cleaning portion is controlled.

The washing method further includes an operation at block S205 that is parallel to the operation at block S204.

At block S205, the water supply to the washing tank of the floor cleaning device base station is controlled.

It should be noted that when the floor cleaning device cleans the floor area and then returns to the floor cleaning device base station, the cleaning member to be washed by the floor cleaning device may get dirty. When the cleaning member needs to be washed, the operation at block S203 and the operation at block S205 may be performed simultaneously. Or, the operation at block S203 or the operation at block S205 may be performed based on an actual washing need of the floor cleaning device during the several washing processes of the cleaning member. For a detailed description, reference can be made to the above-mentioned embodiments. Details thereof will be omitted in the embodiment of the present invention.

With the washing method for the floor cleaning device according to the embodiments of the present invention, when the cleaning member of the mobile cleaning portion needs to be washed, the water supply to the washing tank of the floor cleaning device base station and to the cleaning member of the mobile cleaning portion may be performed, instead of adopting the method in the related art of washing the cleaning member subsequent to the water supply to the washing tank of the floor cleaning device base station only which has a low washing efficiency. Therefore, with the washing method for the floor cleaning device provided by the present invention, the cleaning member may be washed by supplying water to the washing tank of the floor cleaning device base station and to the cleaning member of the mobile cleaning portion. Consequently, the cleaning member of the mobile cleaning portion can be sufficiently wetted, which allows the dirt on the cleaning member to be sufficiently dissolved, improving the washing efficiency for the cleaning member.

The embodiments of the present invention further provide a washing apparatus for a floor cleaning device. FIG. 3 is a block diagram showing a structure of a washing apparatus for a floor cleaning device according to an embodiment of the present invention. As illustrated in FIG. 3, the washing apparatus for the floor cleaning device includes an obtaining module 301 and a control module 302. The obtaining module 301 is configured to obtain a washing instruction. The control module 302 is configured to control, based on the washing instruction, water supply to a washing tank of a floor cleaning device base station and to a cleaning member of a mobile cleaning portion.

The apparatus provided by the above-mentioned embodiments is of the same invention concept as and provides the same advantageous effects as the method provided by the embodiments of the present invention, and thus details thereof will be

The embodiments of the present invention further provide a computer-readable storage medium. The computer-readable storage medium stores a program or an instruction. The program or the instruction causes a computer to perform the steps of the method according to any of the above-mentioned embodiments.

In some embodiments, the computer-executable instruction can further be configured to perform, when executed by a computer processor, the technical solutions of the method according to any of the above-mentioned embodiments of the present invention, for realizing corresponding advantageous effects.

From the above description of the embodiments, it will be clear to those skilled in the art that the present invention can be implemented with the aid of software and necessary common hardware or can be implemented through hardware. In many cases, the former one is a better implementation. Based on this understanding, all or part of the technical solutions of the present invention, or the part thereof that contributes to the related art, can be embodied in the form of a software product. The computer software product may be stored in a computer-readable storage medium such as a floppy disk of a computer, a Read Only Memory (ROM), a Random Access Memory (RAM), a flash, a disk, and an optical disk and contain an instruction to enable a computer device (which may be a personal computer, a server, a network device, etc.) to perform the method according to each of the embodiments of the present invention.

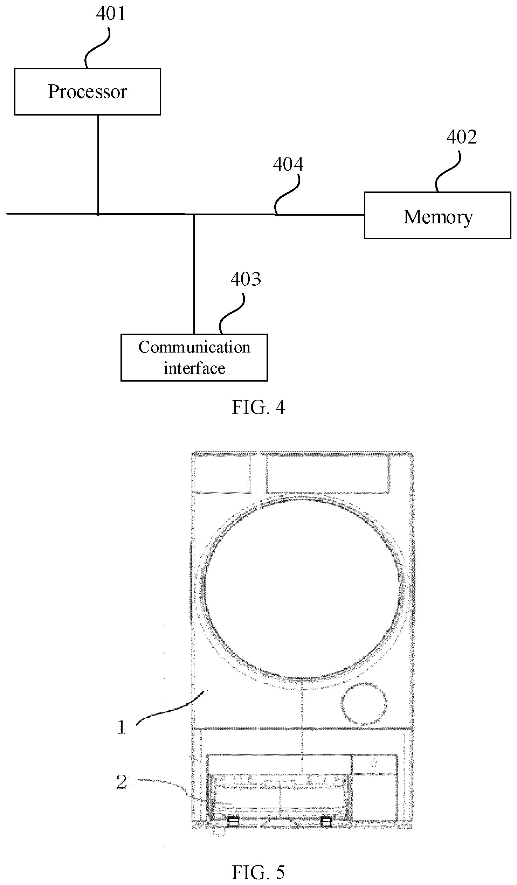

On the basis of the above embodiments, embodiments of the present invention further provide a floor cleaning device. FIG. 4 is a block diagram showing a structure of a floor cleaning device according to an embodiment of the present invention. As illustrated in FIG. 4, the floor cleaning device includes a processor 401 and a memory 402. The processor 401 is configured to invoke a program or an instruction stored in the memory 402 to perform the washing method according to each of the above embodiments. Therefore, the floor cleaning device can provide the advantageous effects of the above embodiments, and thus details thereof will be omitted here.

In an exemplary embodiment of the present invention, as illustrated in FIG. 4, the floor cleaning device may be set to include at least one processor 401, at least one memory 402, and at least one communication interface 403. Various components in the floor cleaning device are coupled together via a bus system 404. The communication interface 403 is configured to perform information transmission with an external device. It should be understood that the bus system 404 is configured to enable connections and communication between these components. In addition to a data bus, the bus system 404 further includes a power bus, a control bus, and a state signal bus. However, for clarity of description, various buses are collectively labeled as the bus system 404 in FIG. 4.

It should be understood that the memory 402 in this embodiment may be a volatile memory or a non-volatile memory, or may include both the volatile memory and the non-volatile memory. In some embodiments, the memory 402 is configured to store elements of: an executable unit or a data structure, or a subset thereof, or an operation system and an application for an extended set thereof. In the embodiments of the present invention, the processor 401 is configured to invoke the program or the instruction stored in the memory 402 to perform steps of each embodiment of the washing method according to the embodiments of the present invention.

The washing method according to the embodiments of the present invention may be applied in or implemented by the processor 401. The processor 401 may be an integrated circuit chip having signal processing capabilities. In an implementation, actions of the above method may be accomplished by an integrated logic circuit in hardware in the processor 401 or by instructions in the form of software. The above processor 401 may be a general-purpose processor, a Digital Signal Processor (DSP), an Application Specific Integrated Circuit (ASIC), a Field Programmable Gate Array (FPGA) or other programmable logic devices, a discrete gate or a transistor logic device, and a discrete hardware component. The general-purpose processor may be a microprocessor, or the processor may further be any conventional processor, etc.

The actions of the method according to the embodiments of the present invention may be directly embodied as performed by a hardware decoding processor or performed by a combination of a hardware unit and a software unit in a decoding processor. The software unit may be located in a random memory, a flash memory, a read-only memory, a programmable read-only memory or an electrically erasable programmable memory, a register, and other storage media mature in the art. The storage medium is located in the memory 402. The processor 401 reads information in the memory 402 and completes the actions of the above method in combination with the hardware.

The embodiments of the present invention further provide a cleaning apparatus. FIG. 5 is a front view of a cleaning apparatus according to an embodiment of the present invention. As illustrated in FIG. 5, the cleaning apparatus includes a clothes treatment device 1 and the floor cleaning device 2 according to the above embodiments. The floor cleaning device 2 includes the floor cleaning device base station and the mobile cleaning portion. The floor cleaning device base station is integrated at a bottom of the clothes treatment device. The accommodation cavity formed by the floor cleaning device base station is configured to accommodate the mobile cleaning portion. For example, the mobile cleaning portion may be a floor sweeper. Operation procedures such as charging, liquid supplement, and washing for the mobile cleaning portion can be realized in the accommodation cavity. The floor cleaning device 2 is located in a space below the laundry treatment device 1. The space below the laundry treatment device 1 is utilized to provide a floor space for the floor cleaning device 2, in such a manner that the floor cleaning device 2 takes up no additional space.

It should be noted that the relational terms herein, such as "first" and "second", are used only for differentiating one entity or operation from another entity or operation, which however, do not necessarily require or imply that there should be any real relationship or sequence. Further, terms "comprise", "include" or any other variations thereof are intended to cover non-exclusive inclusions, such that the process, method, goods, or device including a series of elements do not only include those elements, but further include other elements that are not explicitly listed, or further include inherent elements of the process, method, goods, or device. In a case that there are no more restrictions, an element qualified by the statement "comprises a ..." does not exclude the presence of additional identical elements in the process, method, goods, or device that includes the said element.

### Industrial Applicability

The washing method for the floor cleaning device is provided in the present invention. The washing method includes: obtaining the washing instruction; and controlling, based on the washing instruction, the water supply to the washing tank of the floor cleaning device base station and to the cleaning member of the mobile cleaning portion. In this way, when the cleaning member of the mobile cleaning portion needs to be washed, the water supply to the washing tank of the floor cleaning device base station and to the cleaning member of the mobile cleaning portion may be performed, instead of adopting the method in the related art of washing the cleaning member subsequent to the water supply to the washing tank of the floor cleaning device base station only which has a low washing efficiency. Therefore, with the washing method for the floor cleaning device provided by the present invention, the cleaning member may be washed by supplying water to the washing tank of the floor cleaning device base station and to the cleaning member of the mobile cleaning portion. Consequently, the cleaning member of the mobile cleaning portion can be sufficiently wetted, which allows the dirt on the cleaning member to be sufficiently dissolved, improving the washing efficiency for the cleaning member. The present invention has strong industrial applicability.

## Claims

1. A washing method of a floor cleaning device (2), the washing method comprising:
(S101, S201) obtaining a washing instruction; and
(S102) controlling, based on the washing instruction, water supply to a washing tank of a floor cleaning device base station and to a cleaning member of a mobile cleaning portion,
wherein (S102) said controlling, based on the washing instruction, the water supply to the washing tank of the floor cleaning device base station and to the cleaning member of the mobile cleaning portion is **characterized by**:
controlling a water supply valve of the cleaning member to be opened for supplying water to the cleaning member of the mobile cleaning portion,
and controlling a water supply valve of the washing tank to be opened for supplying water to the washing tank of the floor cleaning device base station.

2. The washing method according to claim 1, further comprising, prior to (S102) said controlling, based on the washing instruction, the water supply to the washing tank of the floor cleaning device base station and to the cleaning member of the mobile cleaning portion:
(S202) controlling water supply to a water tank of the floor cleaning device base station to reach a first predetermined water volume threshold.

3. The washing method according to claim 2, further comprising, subsequent to (S202) said controlling the water supply to the water tank of the floor cleaning device base station to reach the first predetermined water volume threshold:
(S203) controlling the water supply to a water tank of the mobile cleaning portion to reach a second predetermined water volume threshold.

4. The washing method according to claim 1, wherein (S102) said controlling, based on the washing instruction, the water supply to the washing tank of the floor cleaning device base station and to the cleaning member of the mobile cleaning portion comprises:
(S204) controlling, based on the washing instruction, the water supply to the cleaning member of the mobile cleaning portion; and
(S205) controlling the water supply to the washing tank at the floor cleaning device base station subsequent to said controlling the water supply to the cleaning member of the mobile cleaning portion.

5. The washing method according to claim 1, wherein (S102) said controlling, based on the washing instruction, the water supply to the washing tank of the floor cleaning device base station and to the cleaning member of the mobile cleaning portion comprises:
(S205) controlling, based on the washing instruction, the water supply to the washing tank of the floor cleaning device base station; and
(S204) controlling the water supply to the cleaning member of the mobile cleaning portion subsequent to said controlling the water supply to the washing tank of the floor cleaning device base station.

6. The washing method according to claim 1, wherein (S102) said controlling, based on the washing instruction, the water supply to the washing tank of the floor cleaning device base station and to the cleaning member of the mobile cleaning portion comprises:
alternately controlling, based on the washing instruction, the water supply to the washing tank at the floor cleaning device base station and to the cleaning member of the mobile cleaning portion.

7. The washing method according to claim 1, wherein (S102) said controlling, based on the washing instruction, the water supply to the washing tank at the floor cleaning device base station and to the cleaning member of the mobile cleaning portion comprises:
simultaneously controlling, based on the washing instruction, the water supply to the cleaning member of the mobile cleaning portion and to the washing tank at the floor cleaning device base station.

8. The washing method according to claim 1, further comprising:
controlling, in response to controlling the water supply to the washing tank of the floor cleaning device base station, the cleaning member of the mobile cleaning portion to rotate for being washed.

9. The washing method according to claim 1, wherein (S102) said controlling, based on the washing instruction, the water supply to the washing tank of the floor cleaning device base station and to the cleaning member of the mobile cleaning portion comprises:
controlling, based on the washing instruction, the water supply to the washing tank of the floor cleaning device base station prior to the mobile cleaning portion entering the floor cleaning device base station; and
(S204) controlling the water supply to the cleaning member of the mobile cleaning portion subsequent to the mobile cleaning portion entering the floor cleaning device base station.

10. The washing method according to claim 1, wherein (S102) said controlling, based on the washing instruction, the water supply to the washing tank of the floor cleaning device base station and to the cleaning member of the mobile cleaning portion comprises:
controlling, based on the washing instruction, several washing processes to be performed on the cleaning member of the mobile cleaning portion during each washing operation,
wherein each of the several washing processes comprises: controlling the water supply to the washing tank of the floor cleaning device base station and to the cleaning member of the mobile cleaning portion.

11. The washing method according to claim 1, wherein (S102) said controlling, based on the washing instruction, the water supply to the washing tank of the floor cleaning device base station and to the cleaning member of the mobile cleaning portion comprises:
controlling, based on the washing instruction, several washing processes to be performed on the cleaning member of the mobile cleaning portion during each washing operation,
wherein a last washing process of the several washing processes comprises: controlling the water supply to the washing tank at the floor cleaning device base station and to the cleaning member of the mobile cleaning portion; and
wherein other washing processes of the several washing processes comprising: controlling the water supply to the washing tank of the floor cleaning device base station.

12. A washing apparatus of a floor cleaning device (2), the washing apparatus comprising:
an obtaining module (301) configured to obtain a washing instruction; and
a control module (302) configured to control, based on the washing instruction, water supply to a washing tank of a floor cleaning device base station and to a cleaning member of a mobile cleaning portion,
**characterized in that** the washing apparatus is configured to conduct a method according to any one of claims 1 to 11.

13. A computer-readable storage medium having a program or an instruction stored thereon, wherein the program or the instruction causes a computer to perform a washing method according to any one of claims 1 to 11.

14. A floor cleaning device (2), comprising:
a processor (401), and
a memory (402),
wherein the processor (401) is configured to invoke a program or an instruction stored in the memory (402) to perform a washing method according to any one of claims 1 to 11.

15. A cleaning apparatus, comprising:
a laundry treatment device (1); and
a floor cleaning device (2) according to claim 14,
wherein a floor cleaning device base station of the floor cleaning device (2) is located in a space below the laundry treatment device (1).

## Patentansprüche

1. Waschverfahren für eine Bodenreinigungsvorrichtung (2), wobei das Waschverfahren Folgendes umfasst:
(S101, S201) Erhalten einer Waschanweisung; und
(S102) Steuern einer Wasserzufuhr zu einem Waschtank einer Bodenreinigungsvorrichtung-Basisstation und zu einem Reinigungselement eines mobilen Reinigungsbereichs auf der Grundlage der Waschanweisung,
wobei (S102) das Steuern der Wasserzufuhr zu dem Waschtank der Bodenreinigungsvorrichtung-Basisstation und zu dem Reinigungselement des mobilen Reinigungsbereichs auf der Grundlage der Waschanweisung durch Folgendes gekennzeichnet ist:
Steuern eines Wasserzufuhrventils des Reinigungselements, so dass es geöffnet wird, um dem Reinigungselement des mobilen Reinigungsbereichs Wasser zuzuführen,
und Steuern eines Wasserzufuhrventils des Waschtanks, so dass es geöffnet wird, um dem Waschtank der Bodenreinigungsvorrichtung-Basisstation Wasser zuzuführen.

2. Waschverfahren gemäß Anspruch 1, ferner umfassend vor (S102) dem Steuern der Wasserzufuhr zu dem Waschtank der Bodenreinigungsvorrichtung-Basisstation und zu dem Reinigungselement des mobilen Reinigungsbereichs auf der Grundlage der Waschanweisung:
(S202) Steuern der Wasserzufuhr zu einem Wassertank der Bodenreinigungsvorrichtung-Basisstation, um einen ersten vorbestimmten Wasservolumenschwellenwert zu erreichen.

3. Waschverfahren gemäß Anspruch 2, ferner umfassend nach (S202) dem Steuern der Wasserzufuhr zum Wassertank der Bodenreinigungsvorrichtung-Basisstation, um den ersten vorbestimmten Wasservolumenschwellenwert zu erreichen:
(S203) Steuern der Wasserzufuhr zu einem Wassertank des mobilen Reinigungsbereichs, um einen zweiten vorbestimmten Wasservolumenschwellenwert zu erreichen.

4. Waschverfahren gemäß Anspruch 1, wobei (S102) das Steuern der Wasserzufuhr zum Waschtank der Bodenreinigungsvorrichtung-Basisstation und zum Reinigungselement des mobilen Reinigungsbereichs auf der Grundlage der Waschanweisung Folgendes umfasst:
(S204) Steuern der Wasserzufuhr zum Reinigungselement des mobilen Reinigungsbereichs auf der Grundlage der Waschanweisung; und
(S205) Steuern der Wasserzufuhr zum Waschtank an der Bodenreinigungsvorrichtung-Basisstation nach dem Steuern der Wasserzufuhr zum Reinigungselement des mobilen Reinigungsbereichs.

5. Waschverfahren gemäß Anspruch 1, wobei (S102) das Steuern der Wasserzufuhr zum Waschtank der Bodenreinigungsvorrichtung-Basisstation und zum Reinigungselement des mobilen Reinigungsbereichs auf der Grundlage der Waschanweisung Folgendes umfasst:
(S205) Steuern der Wasserzufuhr zum Waschtank der Bodenreinigungsvorrichtung-Basisstation auf der Grundlage der Waschanweisung; und
(S204) Steuern der Wasserzufuhr zum Reinigungselement des mobilen Reinigungsbereichs nach dem Steuern der Wasserzufuhr zum Waschtank der Bodenreinigungsvorrichtung-Basisstation.

6. Waschverfahren gemäß Anspruch 1, wobei (S102) das Steuern der Wasserzufuhr zum Waschtank der Bodenreinigungsvorrichtung-Basisstation und zum Reinigungselement des mobilen Reinigungsbereichs auf der Grundlage der Waschanweisung Folgendes umfasst:
abwechselndes Steuern der Wasserzufuhr zum Waschtank an der Bodenreinigungsvorrichtung-Basisstation und zum Reinigungselement des mobilen Reinigungsbereichs auf der Grundlage der Waschanweisung.

7. Waschverfahren gemäß Anspruch 1, wobei (S102) das Steuern der Wasserzufuhr zum Waschtank an der Bodenreinigungsvorrichtung-Basisstation und zum Reinigungselement des mobilen Reinigungsbereichs auf der Grundlage der Waschanweisung Folgendes umfasst:
gleichzeitiges Steuern der Wasserzufuhr zum Reinigungselement des mobilen Reinigungsteils und zum Waschtank an der Bodenreinigungsvorrichtung-Basisstation auf der Grundlage der Waschanweisung.

8. Waschverfahren gemäß Anspruch 1, ferner umfassend:
Steuern, als Reaktion auf das Steuern der Wasserzufuhr zum Waschtank der Bodenreinigungsvorrichtung-Basisstation, des Reinigungselements des mobilen Reinigungsbereichs, so dass es sich dreht, um gewaschen zu werden.

9. Waschverfahren gemäß Anspruch 1, wobei (S102) das Steuern der Wasserzufuhr zum Waschtank der Bodenreinigungsvorrichtung-Basisstation und zum Reinigungselement des mobilen Reinigungsbereichs auf der Grundlage der Waschanweisung Folgendes umfasst:
Steuern der Wasserzufuhr zum Waschtank der Bodenreinigungsvorrichtung-Basisstation auf der Grundlage der Waschanweisung, bevor der mobile Reinigungsbereich in die Bodenreinigungsvorrichtung-Basisstation einfährt; und
(S204) Steuern der Wasserzufuhr zum Reinigungselement des mobilen Reinigungsteils, nachdem der mobile Reinigungsbereich in die Bodenreinigungsvorrichtungs-Basisstation eingefahren ist.

10. Waschverfahren gemäß Anspruch 1, wobei (S102) das Steuern der Wasserzufuhr zum Waschtank der Bodenreinigungsvorrichtung-Basisstation und zum Reinigungselement des mobilen Reinigungsbereichs auf der Grundlage der Waschanweisung Folgendes umfasst:
Steuern mehrerer Waschprozesse, so dass sie während jedes Waschvorgangs an dem Reinigungselement des mobilen Reinigungsbereichs durchgeführt werden, basierend auf der Waschanweisung,
wobei jeder der mehreren Waschprozesse Folgendes umfasst: Steuern der Wasserzufuhr zum Waschtank der Bodenreinigungsvorrichtung-Basisstation und zum Reinigungselement des mobilen Reinigungsbereichs.

11. Waschverfahren gemäß Anspruch 1, wobei (S102) das Steuern der Wasserzufuhr zum Waschtank der Bodenreinigungsvorrichtung-Basisstation und zum Reinigungselement des mobilen Reinigungsbereichs auf der Grundlage der Waschanweisung Folgendes umfasst:
Steuern mehrerer Waschprozesse, so dass sie während jedes Waschvorgangs an dem Reinigungselement des mobilen Reinigungsbereichs durchgeführt werden, auf der Grundlage der Waschanweisung,
wobei ein letzter Waschprozess der mehreren Waschprozesse Folgendes umfasst: Steuern der Wasserzufuhr zum Waschtank an der Bodenreinigungsvorrichtung-Basisstation und zum Reinigungselement des mobilen Reinigungsbereichs; und
wobei andere Waschprozesse der mehreren Waschprozesse Folgendes umfassen: Steuern der Wasserzufuhr zum Waschtank der Bodenreinigungsvorrichtung-Basisstation.

12. Waschgerät einer Bodenreinigungsvorrichtung (2), wobei das Waschgerät Folgendes umfasst:
ein Erhaltungsmodul (301), das so konfiguriert ist, dass es eine Waschanweisung erhält; und
ein Steuermodul (302), das so konfiguriert ist, dass es auf der Grundlage der Waschanweisung die Wasserzufuhr zu einem Waschtank einer Bodenreinigungsgerät-Basisstation und zu einem Reinigungselement eines mobilen Reinigungsbereichs steuert,
**dadurch gekennzeichnet, dass** das Waschgerät so konfiguriert ist, dass es ein Verfahren gemäß einem der Ansprüche 1 bis 11 durchführt.

13. Computerlesbares Speichermedium aufweisend ein Programm oder eine darauf gespeicherte Anweisung, wobei das Programm oder die Anweisung einen Computer veranlasst, ein Waschverfahren gemäß einem der Ansprüche 1 bis 11 durchzuführen.

14. Bodenreinigungsvorrichtung (2), umfassend:
einen Prozessor (401) und
einen Speicher (402),
wobei der Prozessor (401) so konfiguriert ist, dass er ein Programm oder einen ein im Speicher (402) gespeicherten Befehl aufruft, um ein Waschverfahren gemäß einem der Ansprüche 1 bis 11 durchzuführen.

15. Reinigungsgerät, umfassend:
eine Wäschebehandlungsvorrichtung (1); und
eine Bodenreinigungsvorrichtung (2) gemäß Anspruch 14,
wobei sich eine Bodenreinigungsvorrichtung-Basisstation der Bodenreinigungsvorrichtung (2) in einem Raum unterhalb der Wäschebehandlungsvorrichtung (1) befindet.

## Revendications

1. Procédé de lavage d'un dispositif de nettoyage de sol (2), le procédé de lavage comprenant :
(S101, S201) l'obtention d'une instruction de lavage ; et
(S102) commander, sur la base de l'instruction de lavage, l'alimentation en eau d'un ré servoir de lavage d'une station de base d'un dispositif de nettoyage de sol et d'un élément de nettoyage d'une partie mobile de nettoyage,
dans lequel (S102) ladite commande, sur la base de l'instruction de lavage, de l'alimentation en eau vers le réservoir de lavage de la station de base du dispositif de nettoyage de sol et vers l'élément de nettoyage de la partie de nettoyage mobile est **caractérisé par** :
la commande d'une vanne d'alimentation en eau de l'élément de nettoyage à ouvrir pour alimenter en eau l'élément de nettoyage de la partie de nettoyage mobile ,
et la commande d'une vanne d'alimentation en eau du réservoir de lavage à ouvrir pour alimenter en eau le réservoir de lavage de la station de base du dispositif de nettoyage de sol .

2. Procédé de lavage selon la revendication 1, comprenant en outre, avant (S102) ladite commande, sur la base de l'instruction de lavage, l'alimentation en eau du réservoir de lavage de la station de base du dispositif de nettoyage de sol et de l'élément de nettoyage de la partie mobile de nettoyage:
(S202) la commande de l'alimentation en eau d'un réservoir d'eau de la station de base du dispositif de nettoyage de sol afin d'atteindre un premier seuil de volume d'eau prédéterminé.

3. Procédé de lavage selon la revendication 2, comprenant en outre, après (S202) ladite commande de l'alimentation en eau vers le réservoir d'eau de la station de base du dispositif de nettoyage de sol afin d'atteindre le premier seuil de volume d'eau prédéterminé :
(S203) commander l'alimentation en eau d'un réservoir d'eau de la partie de nettoyage mobile afin d'atteindre un deuxième seuil de volume d'eau prédéterminé.

4. Procédé de lavage selon la revendication 1, dans lequel (S102) ladite commande, sur la base de l'instruction de lavage, de l'alimentation en eau vers le réservoir de lavage de la station de base du dispositif de nettoyage de sol et vers l'élément de nettoyage de la partie mobile de nettoyage comprend :
(S204) commander, sur la base de l'instruction de lavage, l'alimentation en eau vers l'élé ment de nettoyage de la partie de nettoyage mobile ; et
(S205) commander l'alimentation en eau du réservoir de lavage au niveau de la station de base du dispositif de nettoyage de sol après avoir commandé l'alimentation en eau de l'élément de nettoyage de la partie mobile de nettoyage.

5. Procédé de lavage selon la revendication 1, dans lequel (S102) ladite commande, sur la base de l'instruction de lavage, de l'alimentation en eau vers le réservoir de lavage de la station de base du dispositif de nettoyage de sol et vers l'élément de nettoyage de la partie mobile de nettoyage comprend :
(S205) la commande, sur la base de l'instruction de lavage, de l'alimentation en eau vers le réservoir de lavage de la station de base du dispositif de nettoyage de sol ; et
(S204) la commande de l'alimentation en eau vers l'élément de nettoyage de la partie mobile de nettoyage après ledit contrôle de l'alimentation en eau vers le réservoir de lavage de la station de base du dispositif de nettoyage de sol.

6. Procédé de lavage selon la revendication 1, dans lequel (S102) ladite commande, sur la base de l'instruction de lavage, de l'alimentation en eau vers le réservoir de lavage de la station de base du dispositif de nettoyage de sol et vers l'élément de nettoyage de la partie mobile de nettoyage comprend :
la commande alternative, sur la base de l'instruction de lavage, de l'alimentation en eau vers le réservoir de lavage de la station de base du dispositif de nettoyage de sol et vers l'élément de nettoyage de la partie mobile de nettoyage.

7. Procédé de lavage selon la revendication 1, dans lequel (S102) ladite commande, sur la base de l'instruction de lavage, de l'alimentation en eau vers le réservoir de lavage au niveau de la station de base du dispositif de nettoyage de sol et vers l'élément de nettoyage de la partie de nettoyage mobile comprend :
la commande simultanée, sur la base de l'instruction de lavage, de l'alimentation en eau vers l'élément de nettoyage de la partie mobile de nettoyage et vers le réservoir de lavage au niveau de la station de base du dispositif de nettoyage de sol.

8. Procédé de lavage selon la revendication 1, comprenant en outre :
commander, en réponse à la commande de l'alimentation en eau du réservoir de lavage de la station de base du dispositif de nettoyage de sol, l'élément de nettoyage de la partie mobile de nettoyage afin qu'il tourne pour être lavé.

9. Procédé de lavage selon la revendication 1, dans lequel (S102) ladite commande, sur la base de l'instruction de lavage, de l'alimentation en eau du réservoir de lavage de la station de base du dispositif de nettoyage de sol et de l'élément de nettoyage de la partie mobile de nettoyage comprend :
la commande, sur la base de l'instruction de lavage, de l'alimentation en eau du réservoir de lavage de la station de base du dispositif de nettoyage de sol avant que la partie de nettoyage mobile n'entre dans la station de base du dispositif de nettoyage de sol ; et
(S204) la commande de l'alimentation en eau vers l'élément de nettoyage de la partie mobile de nettoyage après l'entrée de la partie mobile de nettoyage dans la station de base du dispositif de nettoyage de sol.

10. Procédé de lavage selon la revendication 1, dans lequel (S102) ladite commande, sur la base de l'instruction de lavage, de l'alimentation en eau vers le réservoir de lavage de la station de base du dispositif de nettoyage de sol et vers l'élément de nettoyage de la partie mobile de nettoyage comprend :
la commande, sur la base de l'instruction de lavage, de plusieurs processus de lavage à effectuer sur l'élément de nettoyage de la partie mobile de nettoyage pendant chaque opération de lavage,
dans lequel chacun des plusieurs processus de lavage comprend: la commande de l'alimentation en eau du réservoir de lavage de la station de base du dispositif de nettoyage de sol et de l'élément de nettoyage de la partie mobile de nettoyage.

11. Procédé de lavage selon la revendication 1, dans lequel (S102) ladite commande, sur la base de l'instruction de lavage, de l'alimentation en eau du réservoir de lavage de la station de base du dispositif de nettoyage de sol et de l'élément de nettoyage de la partie mobile de nettoyage comprend :
commander, sur la base des instructions de lavage, plusieurs processus de lavage à effectuer sur l'élément de nettoyage de la partie mobile de nettoyage pendant chaque opération de lavage,
dans lequel un dernier processus de lavage parmi les plusieurs processus de lavage comprend : la commande de l'alimentation en eau du réservoir de lavage au niveau de la station de base du dispositif de nettoyage de sol et de l'élément de nettoyage de la partie mobile de nettoyage ; et
dans lequel des autres processus de lavage parmi les plusieurs processus de lavage comprennent : la commande de l'alimentation en eau du réservoir de lavage de la station de base du dispositif de nettoyage de sol.

12. Appareil de lavage d'un dispositif de nettoyage de sol (2), l'appareil de lavage comprenant :
un module d'obtention (301) configuré pour obtenir une instruction de lavage ; et
un module de commande (302) configuré pour commander, sur la base de l'instruction de lavage, l'alimentation en eau d'un réservoir de lavage d'une station de base du dispositif de nettoyage de sol et d'un élément de nettoyage d'une partie mobile de nettoyage,
**caractérisé en ce que** l'appareil de lavage est configuré pour exécuter un procédé selon l'une quelconque des revendications 1 à 11.

13. Un support de stockage lisible par ordinateur, sur lequel est stocké un programme ou une instruction, dans lequel le programme ou l'instruction amène un ordinateur à exécuter un procédé de lavage selon l'une quelconque des revendications 1 à 11.

14. Dispositif de nettoyage de sol (2), comprenant :
un processeur (401), et
une mémoire (402),
dans lequel le processeur (401) est configuré pour invoquer un programme ou une instruction stocké(e) dans la mémoire (402) afin d'exécuter un procédé de lavage selon l'une quelconque des revendications 1 à 11.

15. Appareil de nettoyage, comprenant :
un dispositif de traitement du linge (1) ; et
un dispositif de nettoyage de sol (2) selon la revendication 14,
dans lequel une station de base du dispositif de nettoyage de sol (2) est située dans un espace situé sous le dispositif de traitement du linge (1).
